(19) Europäisches Patentamt
European Patent Office
Office européen des brevets

(11) EP 4 335 878 A1

(12) EUROPEAN PATENT APPLICATION

(43) Date of publication:
**13.03.2024 Bulletin 2024/11**

(21) Application number: **22306326.4**

(22) Date of filing: **07.09.2022**

(51) International Patent Classification (IPC):
***C08F 2/48*** *(2006.01)* ***C08F 220/18*** *(2006.01)*
***C08F 265/06*** *(2006.01)* ***C09J 4/06*** *(2006.01)*

(52) Cooperative Patent Classification (CPC):
(C-Sets available)
**C08F 220/1808; C08F 220/1805; C08F 220/1811; C08F 265/06; C09J 4/06;** C08F 2/50 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ARKEMA FRANCE**
**92700 Colombes (FR)**

(72) Inventors:
- **FAN, Mingxin**
  **Guangzhou, 510663 (CN)**
- **ZHOU, Xinyu**
  **Guangzhou, 510663 (CN)**
- **WEI, Zhenjie**
  **Guangzhou, 510663 (CN)**
- **ZHANG, Chenghui**
  **Guangzhou, 510663 (CN)**

(74) Representative: **Leca, François Michel**
**ARKEMA France**
**Département Propriété Industrielle**
**420, rue d'Estienne d'Orves**
**92705 Colombes Cedex (FR)**

(54) **COPOLYMERS, COMPOSITIONS AND USES THEREOF**

(57) The present invention relates to copolymer obtained by polymerizing a monomer mixture comprising: (a) at least one monomer selected from the group consisting of 2-octyl (meth)acrylate, 2-methylbutyl acrylate and 3-methylbutyl acrylate; (b) isobornyl (meth)acrylate; (c) optionally at least one carboxyl-functional ethylenically unsaturated monomer; and (d) optionally at least one ethylenically unsaturated monomer other than (a), (b) and (c). A composition comprising the copolymer and its uses in adhesives and coatings are also provided.

EP 4 335 878 A1

(52) Cooperative Patent Classification (CPC): (Cont.)

C-Sets
**C08F 220/1805, C08F 220/1808, C08F 220/1811;**
**C08F 220/1805, C08F 220/1808, C08F 220/1811, C08F 220/06;**
**C08F 220/1805, C08F 220/1811;**
**C08F 220/1808, C08F 220/1811;**
**C08F 220/1811, C08F 220/1805;**
**C08F 220/1811, C08F 220/1808;**
**C08F 265/06, C08F 220/281, C08F 220/1809;**
**C08F 265/06, C08F 220/281, C08F 220/54;**
**C08F 265/06, C08F 222/1065, C08F 220/1811;**
**C09J 4/06, C08F 265/06**

## Description

### Technical field

The present invention relates to a copolymer obtained by polymerizing a specific combination of monomers which may be of renewable origin (i.e., bio-sourced monomers), a composition comprising the copolymer, and their uses, in particular in adhesives and coatings.

### Technical background

A (meth)acrylic copolymer is a general term for a copolymer obtained by polymerizing two or more monomers comprising a (meth)acryloyl functional group ($-CO-C(R^1)=CH_2$ wherein $R^1$ is H or methyl), such as acrylic acid, methacrylic acid, esters thereof and amides thereof. This versatile class of polymers may be used in a wide variety of products, including paints, coatings, textiles, adhesives, plastics, and even cosmetics and personal care products. The versatility of (meth)acrylic polymers is made possible by the number of building blocks available for polymer synthesis, as well as diverse ester functionality. Chemists select appropriate hard and soft monomers in order to build (meth)acrylic copolymers with specific attributes for a variety of end-use applications. For example, (meth)acrylic copolymers may be used to prepare pressure sensitive adhesives (PSA) in the form of an emulsion, a solvent-borne system or a radiation-cured system. The resulting products exhibit a good balance of UV resistance, transparency, tailored tack, and stiffness due to a large choice of acrylic and methacrylic comonomers.

Currently most raw materials for preparing (meth)acrylic copolymers are still petroleum-based. For example, 2-ethylhexyl acrylate (2-EHA), which can readily copolymerize with a wide variety of other (meth)acrylic or vinyl monomers and impart a low glass transition temperature (Tg) (homopolymer of 2-EHA has a Tg of -70 °C) to the copolymer, is derived from petroleum and hence unsustainable.

Nowadays, the latest challenge is to meet the demand for more sustainable, eco-friendly, energy efficient and greener technology. The replacement of oil/petroleum-based raw materials by bio-based or renewable ingredients can contribute significantly towards decreasing the carbon footprint of a final product. A lot of research has been done to synthesize and commercialize new bio-sourced materials derived from renewable sources, such as plants. Examples of monomers that may be bio-sourced include 2-octyl (meth)acrylate, 3-methylbutyl acrylate, 2-methylbutyl acrylate, isobornyl (meth)acrylate, itaconic acid and esters thereof, etc.

There is a growing interest in utilizing monomers that may be bio-sourced for environmental-friendly products and processes. Although some efforts have been made to replace all or part of the petroleum-sourced raw materials with monomers that may be bio-sourced when preparing (meth)acrylic copolymers, there is still a need for a novel (meth)acrylic copolymers exhibiting both good optical properties (such as transparency and low haze) and mechanical properties (such as peeling strength, holding power and aging stability) which can be used as adhesives or coatings in electronic and touch screen applications.

### Summary of the invention

It is a first object of the invention to provide a copolymer. The copolymer of the present invention is obtained by polymerizing a monomer mixture comprising, based on the total weight of the monomer mixture:

(a) from 45 to 95 wt%, in particular from 45 to 90 wt%, from 48 to 80 wt% or from 50 to 70 wt%, of at least one monomer selected from the group consisting of 2-octyl (meth)acrylate, 2-methylbutyl acrylate, 3-methylbutyl acrylate, and mixtures thereof;

(b) from 5 to 55 wt%, in particular from 10 to 55 wt%, from 20 to 52 wt% or from 30 to 50 wt%, of isobornyl (meth)acrylate;

(c) from 0 to 5 wt%, in particular from 0 to 2 wt%, from 0 to 1 wt% or even 0 wt%, of at least one carboxyl-functional ethylenically unsaturated monomer; and

(d) from 0 to 30 wt%, in particular from 0 to 20 wt%, from 0 to 10 wt% or from 0 to 5 wt%, of at least one ethylenically unsaturated monomer other than (a), (b) and (c).

The second object of the invention relates to a composition comprising the copolymer of the present invention.

Another object of the invention relates to the use of the composition of the invention in the preparation of or as an adhesive or a coating. The composition comprising the copolymer according to this invention can have similar or better mechanical properties and optical performance compared to conventional petroleum-based compositions. At the same time, as the copolymer of this invention may be prepared based on renewable resources, it can be used to develop a sustainable product that minimizes environmental and social impacts.

The invention also provides an article comprising at least one film formed by curing the composition of the present invention which has a transmission of 95% or more and a haze of 0.5% or less.

## Detailed description

The invention will now be described in more detail without limitation in the following description.

As used herein, the term "ethylenically unsaturated compound" means a compound that comprises a polymerizable carbon-carbon double bond. A polymerizable carbon-carbon double bond is a carbon-carbon double bond that can react with another carbon-carbon double bond in a polymerization reaction. A polymerizable carbon-carbon double bond is generally comprised in a group selected from acrylate (including cyanoacrylate), methacrylate, acrylamide, methacrylamide, styrene, maleate, fumarate, itaconate, allyl, propenyl, vinyl and combinations thereof, preferably selected from acrylate, methacrylate and vinyl, more preferably selected from acrylate and methacrylate. The carbon-carbon double bonds of a phenyl ring are not considered as polymerizable carbon-carbon double bonds.

In the present specification, the term "(meth)acrylic" refers to acrylic, methacrylic, or a mixture thereof. A (meth)acrylic group encompasses (meth)acrylate groups and (meth)acrylamide groups. The term "(meth)acrylate" refers to acrylate, methacrylate, or a mixture thereof. The term "(meth)acrylamide" refers to acrylamide, methacrylamide, or a mixture thereof.

In the present specification, the term "bio-based" or "bio-sourced" is used to describe a material, substance, or monomer which originates as far as possible from renewable sources, such as plants, and thus can be regarded as a material of renewable origin. A bio-sourced material may be characterized by its Bio Renewable Carbon Content (%BRC). The %BRC of a material refers to the proportion of biomass derived carbon content in the total carbon content of the material. The calculation formula of %BRC is as follows:

$$\%BRC = \frac{Biosourced\ Carbon}{Biosourced\ Carbon + Fossil\ Carbon} \times 100$$

In the present specification, the monomers used for preparing the copolymer of the invention may be bio-sourced. Such monomers include, but are not limited to, 2-octyl (meth)acrylate, 2-methylbutyl acrylate, 3-methylbutyl acrylate, and isobornyl (meth)acrylate.

For example, 2-octyl (meth)acrylate can be prepared from 2-octanol and (meth)acrylic acid, in particular in the presence of an esterification catalyst of acid type comprising sulfur, such as methanesulfonic acid, and of at least one polymerization inhibitor. Alternatively, it can be prepared by a transesterification reaction between a light (meth)acrylate, such as methyl or ethyl (meth)acrylate, and 2-octanol. Advantageously, 2-octanol can result from the treatment of ricinoleic acid, derived from castor oil, with sodium hydroxide, followed by a distillation in order to remove the sebacic acid. A process for the preparation of 2-octyl acrylate by direct esterification is in particular described in the application WO 2013/064775.

On the other hand, 2-methylbutyl acrylate and 3-methylbutyl acrylate can be prepared from 2-methylbutyl and 3-methylbutyl alcohol respectively and acrylic acid, in particular in the presence of an esterification catalyst of acid type comprising sulfur, such as methanesulfonic acid, and of at least one polymerization inhibitor. Alternatively, they can be prepared by a transesterification reaction between a light acrylate, such as methyl or ethyl acrylate, and 2-methylbutyl or 3-methylbutyl alcohol. Advantageously, 2-methylbutyl and 3-methylbutyl alcohol may be derived from fusel alcohols which is a by-product of the alcoholic fermentation of plants, such as fruits or cereals.

Isobornyl (meth)acrylate is usually synthesized by reacting camphene with (meth)acrylic acid in the presence of acid catalyst and at least one inhibitor. Camphene is one of the most commonly found terpenes in nature, appearing as a colorless crystal with the distinct, pungent smell of camphor oil. It is frequently found in the essential oils of many plants, such as cypress trees, valerian, holy basil, nutmeg, sage, ginger, neroli, and rosemary.

### Copolymer

The copolymer of the present invention is obtained by polymerizing a monomer mixture comprising or consisting of, based on the total weight of the monomer mixture:

(a) from 45 to 95 wt%, in particular from 45 to 90 wt%, from 48 to 80 wt% or from 50 to 70 wt%, of at least one monomer selected from the group consisting of 2-octyl (meth)acrylate, 2-methylbutyl acrylate, 3-methylbutyl acrylate and mixtures thereof;

(b) from 5 to 55 wt%, in particular from 10 to 55 wt%, from 20 to 52 wt% or from 30 to 50 wt%, of isobornyl

(meth)acrylate;

(c) from 0 to 5 wt%, in particular from 0 to 2 wt%, from 0 to 1 wt% or even 0 wt%, of at least one carboxyl-functional ethylenically unsaturated monomer; and

(d) from 0 to 30 wt%, in particular from 0 to 20 wt%, from 0 to 10 wt% or from 0 to 5 wt%, of at least one ethylenically unsaturated monomer other than (a), (b) and (c).

The total weight of components (a) + (b) + (c) + (d) may represent 100% of the weight of the monomer mixture.

Component (a) comprises or consists of at least one monomer selected from the group consisting of 2-octyl (meth)acrylate, 2-methylbutyl acrylate, 3-methylbutyl acrylate and mixtures thereof.

In one embodiment, component (a) comprises or consists of a single monomer selected from the group consisting of 2-octyl (meth)acrylate, 2-methylbutyl acrylate and 3-methylbutyl acrylate.

Alternatively, component (a) may comprise or consist of a mixture of 2-octyl (meth)acrylate and at least one monomer selected from 3-methylbutyl acrylate, 2-methylbutyl acrylate and mixtures thereof. In particular, component (a) may comprise or consist of, based on the total weight of component (a):

(a1) from 1 to 99 wt% of 2-octyl (meth)acrylate; and

(a2) from 1 to 99 wt% of 3-methylbutyl acrylate and/or 2-methylbutyl acrylate.

The total weight of components (a1) + (a2) may represent 100% of the weight of component (a).

The weight ratio of the components (a1) and (a2) is not particularly limited and can be adjusted according to the expected characteristic of the copolymer, such as Tg and %BRC. In a preferred example, component (a) may comprise, based on the total weight of component (a): from 30 to 99 wt% of 2-octyl (meth)acrylate and from 1 to 70 wt% of 3-methylbutyl acrylate and/or 2-methylbutyl acrylate. In a more preferred example, component (a) may comprise, based on the total weight of component (a): from 50 to 99 wt% of 2-octyl (meth)acrylate and from 1 to 50 wt% of 3-methylbutyl acrylate and/or 2-methylbutyl acrylate.

Component (b) comprises or consists of isobornyl (meth)acrylate. Isobornyl (meth)acrylate is a high Tg and highly hydrophobic monomer. The bicyclic structure of isobornyl (meth)acrylate can result in improved mechanical property and thermal stability of the copolymer of this invention. Component (b) may comprise or consist of isobornyl acrylate (IBOA) and/or isobornyl methacrylate (IBOMA). In one embodiment, component (b) consists of IBOA. In another embodiment, component (b) consists of IBOMA. IBOMA may be more preferred than IBOA as there is a concern over IBOA being an allergen, while IBOMA has low skin irritation and high Tg, which can contribute to high modulus and holding power when used in a cured product.

Component (c) comprises or consists of at least one carboxyl-functional ethylenically unsaturated monomer. The carboxyl-functional ethylenically unsaturated monomer may be an ethylenically unsaturated mono- or dicarboxylic acid, such as (meth)acrylic acid. The presence of the component (c) could improve the adhesive force of the copolymer when it is used in an adhesive, especially an adhesive intended to be applied on polar substrates, such as metal or glass substrates. However, the presence of the component (c) may result in a copolymer having a high acid value, which is not suitable for use in electronics, as it may cause corrosion on the metal surface especially in high temperature and/or high humidity environment. For example, when a copolymer of high acid value is used in adhesives for electronics, it may corrode the circuit and the indium tin oxide (ITO) conductive layer. Therefore the weight percentage of component (c) present in the monomer mixture can be adjusted depending on the end-use application of the copolymer of the invention.

In some embodiments, the monomer mixture may be substantially free of component (c). "Substantially free of component (c)" means that monomer mixture comprises less than 0.5 wt%, less than 0.2 wt%, less than 0.1 wt%, less than 0.01 wt% , less than 0.001 wt% or even 0 wt%, of component (c) based on the total weight of the monomer mixture. As discussed in the above paragraph, the copolymer prepared from component (a), component (b) and optional component (d) without component (c) can be suitable for use in adhesives for electronics.

Alternatively, when the monomer mixture comprises component (c), the amount of component (c) may be 0.5 to 5 wt%, in particular from 0.5 to 3 wt% or from 1 to 2 wt%, based on the total weight of the monomer mixture.

Component (d) may comprise or consist of at least one ethylenically unsaturated monomer other than the monomers recited in components (a), (b) and (c). Examples of suitable monomers that can be included in component (d) are (meth)acrylamides; alpha-olefins; vinyl ethers; allyl ethers; styrene and other aromatic vinyl compounds; diesters of ethylenically unsaturated dicarboxylic acids such as maleic, fumaric, mesaconic, citraconic, aconitic or itaconic acid; C1-C20 alkyl (meth)acrylates other than 2-octyl (meth)acrylate, 2-methylbutyl acrylate and 3-methylbutyl acrylate such as methyl (meth)acrylate, ethyl (meth)acrylate, butyl (meth)acrylate, iso-butyl (meth)acrylate, tert-butyl (meth)acrylate,

pentyl (meth)acrylate, hexyl (meth)acrylate, heptyl (meth)acrylate, octyl (meth)acrylate, 2-ethylhexyl (meth)acrylate, iso-octyl (meth)acrylate, decyl (meth)acrylate and dodecyl (meth)acrylate; cyclic (meth)acrylates other than isobornyl (meth)acrylate such as cyclohexyl (meth)acrylate, phenyl (meth)acrylate and 2-phenoxyethyl (meth)acrylate; N-vinyl pyrrolidone; N-vinyl caprolactam; substituted (meth)acrylamides such as N-methyl (meth)acrylamide, N-ethyl (meth)acrylamide, N-isopropyl (meth)acrylamide, N-cyclohexyl (meth)acrylamide, N-cyclopentyl (meth)acrylamide, N-methoxymethyl (meth)acrylamide, N-butoxymethyl (meth)acrylamide, N,N-dibutyl (meth)acrylamide, N-butyl (meth)acrylamide, N,N-diethyl (meth)acrylamide, N,N-dimethyl (meth)acrylamide, N-octyl (meth)acrylamide, N-decyl (meth)acrylamide, N-dodecyl (meth)acrylamide, N-octadecyl (meth)acrylamide, N-isopropyl (meth)acrylamide, N-tert-butyl (meth)acrylamide, N-isobutyl (meth)acrylamide, N,N,3,3-tetramethylacrylamide, N-phenyl (meth)acrylamide, N-(meth)acryloyl morpholine; and mixtures thereof. The selection of monomers in component (d) can be based on the desired features of the copolymer of the present invention, such as Tg and functional groups.

In some embodiments, component (d) may comprise at least one monomer selected from a crosslinking monomer or a functional monomer. The presence of a crosslinking or functional monomer is helpful to prepare a copolymer with a high crosslinking degree and excellent mechanical properties (such as its resistance to elongation). When used in adhesives or coatings, the copolymers with high crosslinking degree can contribute to the water or chemical resistance properties of the formed film.

Examples of crosslinking monomers include:

- an ethylenically unsaturated monomer bearing a carbonyl group (which may react with a compound bearing at least two amino groups, preferably at least two hydrazide groups) such as diacetone (meth)acrylamide 2-(acetoacetoxy)ethyl (meth)acrylate 2-(acetoacetoxy)propyl (meth)acrylate, 3-(acetoacetoxy)propyl (meth)acrylate, 4-(acetoacetoxy)butyl (meth)acrylate, 2,3-di(acetoacetoxy)propyl (meth)acrylate, diacetone (meth)acrylate, acetonyl (meth)acrylate, an allylacetoacetate, a vinyl acetoacetate, an acetoacetamides, methylvinylketone, ethylvinylketone, butylvinylketone, (meth)acrolein, crotonaldehyde and formylstyrene;
- an ethylenically unsaturated compound bearing a hydroxyl group (which may react with a polyisocyanate) such as a hydroxyalkyl (meth)acrylate (in particular 2-hydroxyethyl (meth)acrylate or 2-hydroxypropyl (meth)acrylate) or a N-hydroxyalkyl (meth)acrylamide (in particular N-(2-hydroxyethyl) (meth)acrylamide, N-methylol (meth)acrylamide, N-methyl-N-(2-hydroxyethyl) (meth)acrylamide or N-ethyl-N-(2-hydroxyethyl) (meth)acrylamide);
- an ethylenically unsaturated compound bearing a siloxane group (which may react with a copolymer chain bearing a siloxane group) such as vinyl trimethoxysilane, vinyl diimethoxymethylsilane, vinyl triethoxysilane, vinyl tripropoxysilane, vinyl triisopropoxysilane, vinyl tris(methoxyethoxy)silane, vinyl tributoxysilane, vinyl triacetoxysilane, 3-methacryloxypropyl trimethoxysilane, 3-methacryloxypropylmethyl dimethoxysilane, methacryloxymethyl trimethoxysilane, 3-methacryloxypropyl tris(2-methoxyethoxy) silane, vinyl trichlorosilane, vinyl methyldichlorosilane, vinyltris(2-methoxyethoxy)silane;
- a compound bearing at least two ethylenic unsaturations (which may react with a copolymer chain bearing an ethylenic unsaturation) such as a multifunctional (meth)acrylate, a polyvinylic monomer or a compound comprising both a (meth)acrylic group and a vinyl group, more particularly allyl (meth)acrylate, diallyl (meth)acrylate, vinyl (meth)acrylate, divinyl benzene, ethylene glycol di(meth)acrylate, diallyl phthalate, 1,6-hexanediol di(meth)acrylate, trimethylolpropane tri(meth)acrylate, pentaerythritol triallyl ether, dicyclopentenyl-6-oxyethyl (meth)acrylate, glycerol tri(meth)acrylate;

and mixtures thereof.

Examples of functional monomers include:

- acetoxyethyl (meth)acrylate,
- monomers carrying a phosphonic acid ($-P(=O)(OH)_2$) group, a phosphonate ($-P(=O)(OR)_2$) group, a sulfonic acid ($-S(=O)_2OH$) group, a sulfonate ($-S(=O)_2OR$) group or a phosphate ($-O-P(=O)(OR)_2$) group , wherein each R is independently a counterion, a hydrogen atom, or an optionally substituted hydrocarbylphosphate or phosphonate functional group(s),
- monomers carrying ureido functional group(s),
- monomers carrying amine functional group(s),

and mixtures thereof.

In some embodiments, the monomer mixture may be substantially free of component (d).

In the practice of the invention, the copolymer of the invention can be obtained by conventional polymerization techniques including, but not limited to, the solvent polymerization, dispersion or emulsion polymerization, solventless bulk polymerization, and radiation polymerization, including processes using ultraviolet light, electron beam, and gamma radiation. A polymerization initiator, especially a thermal initiator or a photo-initiator in an amount effective to polymerize

the comonomers, may be used.

The copolymers of the invention are preferably not prepared by dispersion or emulsion polymerization, i.e. in an aqueous medium and in the presence of one or more polymerization initiators and optionally one or more surfactants.

The copolymers of the invention are preferably prepared by solvent polymerization, i.e. in an organic solvent medium and in the presence of one or more polymerization initiators.

Examples of suitable organic solvents include hydrocarbon organic solvents, such as n-hexane, n-heptane, cyclohexane, methylcyclohexane, benzene, toluene, or xylene; halogenated organic solvents such as trichloroethylene or methylchloroform; esters such as ethyl, isopropyl, n-butyl or sec-butyl acetate; and mixtures thereof. The amount of organic solvent may be adjusted to have an amount of copolymer of 10 to 80% by weight, and preferably from 20 to 50% by weight, based on the total amount of copolymer and organic solvent.

Examples of suitable polymerization initiators include azo compounds and peroxides. An azo compound is a compound comprising an azo group of the formula -N=N-. An example of a suitable azo compound is azobisisobutyronitrile (AIBN). A peroxide compound is a compound comprising a peroxide group of the formula -O-O-. A peroxide compound may in particular be selected from hydrogen peroxide, hydroperoxide (R-O-O-H), dialkyl or alkylaryl peroxide (R-O-O-R'), peracid (RC(=O)-O-O-H), peroxyester (RC(=O)-O-O-R'), diacyl peroxide (RC(=O)-O-O-C(=O)-R'), a peroxycarbonate (R-O-C(=O)-O-O-C(=O)-O-R'), a peroxyketal (from the reaction between a ketone and hydrogen peroxide or a hydroperoxide), as well as mixtures thereof, R and R' being independently aliphatic, cycloaliphatic or aromatic groups. Examples of suitable peroxide compounds are dibenzoyl peroxide, dilauroyl peroxide, diisopropyl peroxide, tert-butyl hydroperoxide, cumene hydroperoxide, cyclohexanone peroxide, methyl ethyl ketone peroxide, tert-butyl peroxyoctoate, tert-butyl peroxybenzoate, dicumyl peroxide, 1,1-bis(tert-butylperoxy)-3,3,5-trimethylcyclohexane, tert-butyl peroxymaleate and mixtures thereof.

The copolymer of the invention may be a single-stage copolymer. As used herein, a "single-stage copolymer" means a copolymer prepared with a single polymerization step as opposed to a "multi-stage copolymer" which is prepared using multiple sequential polymerization steps. Accordingly, the one-stage copolymer may exhibit a single phase and a single Tg.

The copolymer may have a Bio Renewable Carbon content (%BRC) of greater than 10, preferably greater than 30, more preferably greater than 50, and even more preferably greater than 70.

The weight average molecular weight (Mw) of the copolymer of the present invention is not particularly limited but, from points of view such as handleability, viscosity and mechanical properties, is preferably from 20,000 to 120,000 g/mol, preferably from 30,000 to 100,000 g/mol, and more preferably from 40,000 to 90,000 g/mol. The molecular weight distribution (Mw/Mn), i.e., the weight average molecular weight (Mw) / number average molecular weight (Mn) of the copolymer of the invention may be in a range of 1.01 - 5.5, preferably in a range of 1.05 - 5.

The glass transition temperature (Tg) of the copolymer of the present invention is not particularly limited but is preferably in a range of from -40 °C to 50 °C, preferably from -30 °C to 40 °C, and more preferably from -20°C to 30°C, calculated according to Fox Equation. The calculation formula is:

$$\frac{1}{T_g} = \frac{W_1}{T_{g1}} + \frac{W_2}{T_{g2}} + \cdots + \frac{W_n}{T_{gn}}$$

wherein $W_1$ to $W_n$ is the mass fraction of each monomer used to obtain the copolymer; and $T_{g1}$ to $T_{gn}$ is the glass transition temperature (in Kelvin degree, "K") of the homopolymer corresponding to each monomer.

## Composition

The composition of the present invention comprises the copolymer disclosed above.

In a first embodiment of the composition of the invention, the composition comprises:

(A) the copolymer of the invention; and
(B) at least one crosslinking agent selected from a multifunctional amine, hydrazide, aziridine, isocyanate, oxazole or epoxy compound.

Such a composition may be a thermally-curable composition, i.e. a composition that is cured by heating. In particular, the composition may be applied on a surface of a substrate and cured by heating (such as oven drying). Once the composition is cured, it may exhibit the desired properties, such as adhesiveness.

The at least one crosslinking agent (B) can be incorporated into the thermally-curable composition to increase its cohesive strength. The crosslinking agent (B) includes a multifunctional amine, hydrazide, aziridine, isocyanate,

oxazole or epoxy compound. One example of a multifunctional aziridine compound is 1,1'-(1,3-phenylenedicarbonyl)-bis-(2-methylaziridine) (CAS No. 7652-64-4). Common multifunctional isocyanate compounds are trimethylolpropane toluene diisocyanate, toluene diisocyanate, and others known in the art. The crosslinking agent can be added to the copolymer after polymerization and activated by heat during drying of the coated substrate. Such a composition can, in particular, be suitable for use as a PSA.

In a second embodiment of the composition of the invention, the composition comprises:

(A) the copolymer of the invention;

(C) at least one ethylenically unsaturated compound; and
optionally (D) at least one free-radical initiator.

Such a composition may be a radiation-curable composition, i.e. a composition that is cured by exposure to radiation, for example heat, UV energy, visible light and/or an electron-beam. In particular, the radiation-curable composition may be cured by at least one of: (1) exposing the composition to UV energy and/or visible light; (2) exposing the composition to an electron beam, (3) initiating polymerization through the use of a redox-generated radical; (4) initiating polymerization through the use of a thermally-generated radical, or a combination thereof.

In the radiation-curable composition, component (C) can comprise or consist of at least one (meth)acryloyl-functionalized monomer or oligomer.

As used herein, the term "(meth)acryloyl-functionalized monomer" means a monomer comprising a (meth)acryloyl group, in particular an acryloyl group. The term "(meth)acryloyl-functionalized oligomer" means an oligomer comprising a (meth)acryloyl group, in particular an acryloyl group. The term "(meth)acryloyl group" encompasses acrylate groups ($-O-CO-CH=CH_2$), methacrylate groups ($-O-CO-C(CH_3)=CH_2$), acrylamide groups

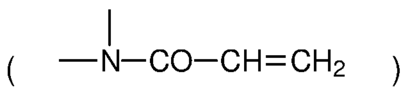

and methacrylamide groups

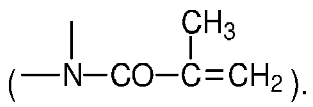

Component (C) may comprise or consists of (C1) at least one (meth)acryloyl-functionalized monomer. Component (C1) may comprise a mixture of (meth)acryloyl-functionalized monomers.

The (meth)acryloyl-functionalized monomer may have a molecular weight of less than 600 g/mol, in particular from 80 to 550 g/mol, more particularly 100 to 500 g/mol.

The (meth)acryloyl-functionalized monomer may have 1 to 6 (meth)acryloyl groups, in particular 1 to 4 (meth)acryloyl groups.

In particular, component (C1) may comprise or consist of at least one mono(meth)acryloyl-functionalized monomer. The mono(meth)acryloyl-functionalized monomer(s) may advantageously function as a reactive diluent and reduce the viscosity of the composition of the invention. Further, it may impart the cured composition with the viscoelastic characteristics required for adhesiveness or weather resistance.

Component (C1) may comprise or consist of at least one mono(meth)acrylate-functionalized monomer including, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and mixtures thereof.

Specific examples of mono(meth)acrylate-functionalized compounds include methyl (meth)acrylate; ethyl

(meth)acrylate; n-propyl (meth)acrylate; n-butyl (meth)acrylate; sec-butyl (meth)acrylate; isobutyl (meth)acrylate; 2-methylbutyl (meth)acrylate; 3-methylbutyl (meth)acrylate; n-hexyl (meth)acrylate; 4-methyl-2-pentyl (meth)acrylate; 2-ethylhexyl (meth)acrylate; n-octyl (meth)acrylate; isooctyl (meth)acrylate; isononyl (meth)acrylate; n-decyl (meth)acrylate; isodecyl (meth)acrylate; 2-propylheptyl(meth)acrylate; n-dodecyl (meth)acrylate; tridecyl (meth)acrylate; tetradecyl (meth)acrylate; hexadecyl (meth)acrylate; C18-alkyl (meth)acrylate; C22-alkyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; isobornyl (meth)acrylate; 2-(2-ethoxyethoxy)ethyl (meth)acrylate; cyclohexyl (meth)acrylate; ter-butylcyclohexyl (meth)acrylate; glycidyl (meth)acrylate; benzyl (meth)acrylate,;2-phenoxyethyl (meth)acrylate: isobornyl (meth)acrylate; tricyclodecanemethanol mono(meth)acrylate; phenol (meth)acrylate; nonylphenol (meth)acrylate; cyclic trimethylolpropane formal (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; methoxy polyethylene glycol (meth)acrylates; (3-(2-hydroxyalkyl)oxazolidinone (meth)acrylate; (2,2-dimethyl-1,3-dioxolan-4-yl)methyl (meth)acrylate; (2-ethyl-2-methyl-1,3-dioxolan-4-yl)methyl (meth)acrylate; (1,3-dioxan-5-yl (meth)acrylate; (1,3-dioxolan-4-yl)methyl (meth)acrylate; glycerol carbonate (meth)acrylate; alkoxylated (i.e. ethoxylated and/or propoxylated) derivatives thereof; and combinations thereof.

Preferably, component (C1) comprises a mono(meth)acrylate-functionalized monomer having a branched alkyl group or a cyclic group, such as 2-ethylhexyl (meth)acrylate, tert-butyl (meth)acrylate, 2-phenoxyethyl (meth)acrylate, benzyl (meth)acrylate, isobornyl (meth)acrylate, tert-butyl cyclohexyl (meth)acrylate, 3,3,5-trimethyl cyclohexyl (meth)acrylate, dicyclopentadienyl (meth)acrylate, tricyclodecane methanol mono(meth)acrylate, tetrahydrofurfuryl (meth)acrylate, cyclic trimethylolpropane formyl (meth)acrylate (also referred to as 5-ethyl-1,3-dioxan-5-yl)methyl (meth)acrylate), (2,2-dimethyl-1,3-dioxolan-4-yl)methyl (meth)acrylate, (2-ethyl-2-methyl-1,3-dioxolan-4-yl)methyl (meth)acrylate. Such monomers can advantageously increase the Tg and adhesion property of the cured composition compared to monofunctional alkyl (meth)acrylates having straight-chain alkyl groups with the same number of carbon atoms.

Component (C1) may comprise or consist of at least one mono(meth)acrylamide-functionalized monomer including, but are not limited to, (meth)acrylamide; N-methyl (meth)acrylamide; N-ethyl (meth)acrylamide; isopropyl (meth)acrylamide; N,N-diethyl (meth)acrylamide; N-cyclohexyl (meth)acrylamide, N-cyclopentyl (meth)acrylamide; N-butoxymethyl (meth)acrylamide; N,N-dibutyl (meth)acrylamide; N-butyl (meth)acrylamide; diacetone (meth)acrylamide; N-(N,N-dimethylamino)ethyl (meth)acrylamide; N,-(N,N-dimethylamino)propyl (meth)acrylamide, N,N-diethyl (meth)acrylamide; N,N-dimethyl (meth)acrylamide; N-octyl (meth)acrylamide; N-decyl (meth)acrylamide; N-dodecyl (meth)acrylamide; N-octadecyl (meth)acrylamide; N-isopropyl (meth)acrylamide; N-tert-butyl (meth)acrylamide; N-isobutyl (meth)acrylamide, N,N,3,3-tetramethylacrylamide; N-methylol (meth)acrylamide; N-[2-hydroxyethyl] (meth)acrylamide; N-phenyl (meth)acrylamide; acryloyl morpholine; and combinations thereof.

In a preferred embodiment, component (C1) may comprise or consist of a mixture of at least one mono(meth)acrylate-functionalized monomer and at least one mono(meth)acrylamide-functionalized monomer.

Component (C) may comprise 0 to 100%, in particular 5 to 100%, more particularly 10 to 100%, even more particularly 20 to 100%, by weight of component (C1) based on the total weight of component (C). In particular, component (C) may comprise 5 to 50%, or 10 to 50%, or 15 to 50%, or 20 to 50%, by weight of component (C1) based on the total weight of component (C). Alternatively, component (C) may comprise 50 to 100%, or 55 to 100%, or 60 to 100%, or 65 to 100%, by weight of component (C1) based on the total weight of component (C).

Component (C) may comprise or consist of (C2) at least one (meth)acrylate-functionalized oligomer. Component (C2) may comprise or consist of a mixture of (meth)acrylate-functionalized oligomers.

The (meth)acrylate-functionalized oligomer may be selected in order to enhance the flexibility, strength and/or modulus, among other attributes, of a cured polymer prepared using the composition of the present invention.

The (meth)acrylate functionalized oligomer may have 1 to 18 (meth)acrylate groups, in particular 2 to 6 (meth)acrylate groups, more particularly 2 to 6 acrylate groups.

The (meth)acrylate functionalized oligomer may have a number average molecular weight of from 2,000 to 100,000, preferably from 3,000 to 90,000 and more preferably from 4,000 to 80,000.

The (meth)acrylate-functionalized oligomers may be selected from the group consisting of (meth)acrylate-functionalized urethane oligomers (sometimes also referred to as "urethane (meth)acrylate oligomers," "polyurethane (meth)acrylate oligomers" or "carbamate (meth)acrylate oligomers"), (meth)acrylate-functionalized epoxy oligomers (sometimes also referred to as "epoxy (meth)acrylate oligomers"), (meth)acrylate-functionalized polyether oligomers (sometimes also referred to as "polyether (meth)acrylate oligomers"), (meth)acrylate-functionalized polydiene oligomers (sometimes also referred to as "polydiene (meth)acrylate oligomers"), (meth)acrylate-functionalized polycarbonate oligomers (sometimes also referred to as "polycarbonate (meth)acrylate oligomers"), and (meth)acrylate-functionalized polyester oligomers (sometimes also referred to as "polyester (meth)acrylate oligomers") and mixtures thereof.

In particular, component (C2) may comprise or consist of a (meth)acrylate-functionalized urethane oligomer,

more preferably an acrylate-functionalized urethane oligomer.

Advantageously, the (meth)acrylate-functionalized oligomer comprises a (meth)acrylate-functionalized urethane oligomer having two (meth)acrylate groups, more preferably an acrylate-functionalized urethane oligomer having two acrylate groups.

(Meth)acrylate-functionalized urethane oligomers suitable for use in the composition of the present invention may be prepared by reacting a polyisocyanate (e.g. an aliphatic, cycloaliphatic and/or aromatic diisocyanate or triisocyanate) with a polyol (e.g. a polyester polyol, a polyether polyol, a polycarbonate polyol, a polycaprolactone polyol, a polyorganosiloxane polyols or a polydiene polyol such as a polybutadiene polyol, or combinations thereof) to form an isocyanate-functionalized oligomers which are then reacted with a hydroxyl-functionalized (meth)acrylate (such as hydroxyethyl (meth)acrylate) to provide terminal (meth)acrylate groups. For example, the (meth)acrylate-functionalized urethane oligomer may contain two, three, four or more (meth)acrylate functional groups per molecule. Other orders of addition may also be practiced to prepare a (meth)acrylate-functionalized urethane oligomer, as is known in the art. For example, the hydroxyl-functionalized (meth)acrylate may be first reacted with a polyisocyanate to obtain an isocyanate-functionalized (meth)acrylate, which may then be reacted with a polyol. Alternatively, all the components may be combined and reacted at the same time.

In a preferred embodiment, the (meth)acrylate-functionalized urethane oligomer comprises, in its backbone, a hydrophobic moiety derived from a polyolefin, a polydiene or a hydrogenated polydiene, such as a polypropylene, a polybutadiene, a hydrogenated polybutadiene, a polyisoprene or a hydrogenated polyisoprene. Said hydrophobic moiety may be incorporated by using a polypropylene polyol, a polybutadiene polyol, a hydrogenated polybutadiene polyol, a polyisoprene polyol, or a hydrogenated polyisoprene polyol to prepare the (meth)acrylate-functionalized urethane oligomer. Examples of hydrophobic (meth)acrylate-functionalized urethane oligomers can be commercially available from Sartomer (in particular CN8899 NS, a di-functional urethane acrylate oligomer). The addition of a hydrophobic (meth)acrylate-functionalized urethane oligomer into the radiation-curable composition can improve the rebound resilience property of the film formed therefrom.

Component (C) may comprise 0 to 100%, in particular 0 to 90%, more particularly 0 to 85%, even more particularly 0 to 80%, by weight of component (C2) based on the total weight of component (C). In particular, component (C) may comprise 0 to 50%, or 0 to 40%, or 0 to 30%, or 0 to 25%, by weight of component (C2) based on the total weight of component (C). Alternatively, component (C) may comprise 50 to 100%, or 55 to 90%, or 60 to 90%, or 65 to 90%, by weight of component (C2) based on the total weight of component (C).

Contrary to tackifiers which are conventionally used in adhesive compositions (e.g., styrenated terpene, hydrocarbon resin and polyisobutylene), the copolymer of the invention exhibits excellent compatibility with (meth)acrylate-functionalized monomers and oligomers. Accordingly, the radiation-curable composition of the present invention has excellent compatibility between the ingredients and can be used to obtain an optically clear adhesive or coating.

The at least one free-radical initiator (D) may be a photo-initiator, i.e. an initiator that generates a radical upon exposure to electromagnetic radiation, such as UV light or visible light. Examples of photoinitiators are benzoins, benzoin ethers, acetophenones, $\alpha$-hydroxy acetophenones, benzyl, benzyl ketals, anthraquinones, phosphine oxides, acylphosphine oxides, $\alpha$-hydroxyketones, phenylglyoxylates, $\alpha$-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.. Among these, phosphine oxides are preferable. Examples of commercially available photoinitiators include those sold under the trade names SpeedCure TPO and SpeedCure XKm from Sartomer.

Alternatively, the at least one free-radical initiator (D) may be a peroxide initiator. A peroxide initiator may be activated by heating or by a reducing agent. The peroxide initiator may be as defined above for the polymerization initiator. Examples of suitable reducing agents are a tertiary amine such as N,N-dimethylaniline, N-(4-methoxyphenyl)pyrrolidine and N-phenyldiethanol amine, sodium sulfite or sodium metabisulfite.

The radiation-curable composition described herein can be applied and cured using conventional techniques, such as by UV light from medium pressure mercury lamps directly through the layers. Alternatively, electron beam (EB) radiation may be used to cure the radiation-curable adhesive composition. When EB radiation is used, the composition may be free of free-radical initiator (D).

In the radiation-curable composition of the invention, the content of each ingredient may be controlled appropriately in accordance with factors such as the target use application and property requirements. As an example, the radiation-curable composition may comprise or consist of, based on the total weight of the composition:

10 to 90 wt%, in particular 60 to 80 wt%, of (A) the copolymer according to the invention;

10 to 90 wt%, in particular 20 to 40 wt%, of (C1) at least one mono(meth)acryloyl-functionalized monomer;

0 to 5 wt%, in particular 1 to 3 wt% of (D) at least one free-radical initiator.

In particular, the total weight of components (A), (C1) and (D) may represent 100% of the weight of the radiation-curable composition.

Alternatively, the radiation-curable composition may comprise or consist of, based on the total weight of the composition:

10 to 90 wt%, in particular 10 to 35 wt% of (A) the copolymer according to the invention;

10 to 90 wt%, in particular 15 to 35 wt% of (C1) at least one mono(meth)acryloyl-functionalized monomer;

10 to 90 wt%, in particular 30 to 74 wt% of (C2) at least one (meth)acrylate-functionalized urethane oligomer; and

0 to 5 wt%, in particular 1 to 3 wt% of (D) at least one free-radical initiator.

In particular, the total weight of components (A), (C1), (C2) and (D) may represent 100% of the weight of the radiation-curable composition.

In a third embodiment of the composition according to this invention, the composition may comprise the copolymer of this invention and a solvent (organic solvent or water). In one case with organic solvent as the solvent, the addition of the organic solvent can help adjust the viscosity of the composition, to reach a desired viscosity for application. In another case with water as the solvent, the composition is an aqueous composition (or emulsion, latex, water dispersion). The copolymer in the composition generally represents from 5 to 90 wt%, preferably from 10 to 75 wt%, with respect to the total weight of the composition. By dry weight, the copolymer generally represents from 5 to 50 wt% and preferably from 20 to 40 wt%, with respect, to the total weight of the composition. The composition may further comprise an additional binder, such as silicon resin or a silicate. When the solvent is an organic solvent, the composition may be used as a solventborne coating composition or a solventborne adhesive composition. When the solvent is water, the composition may be used as a waterborne coating composition or a waterborne adhesive composition.

The above-described copolymer and the compositions of this invention can be used in various applications including automotive, consumer electronics, and construction industries. As two standard examples, they can be used in the preparation of or as an adhesive or a coating, which will be discussed in detail below.

Uses in adhesives

In the specification, "adhesive" or "adhesives" means a substance applied between two separate items that binds them together and resists their separation. Adhesives may be also known as glue, sealant, cement, mortar, putty, mucilage or paste.

The composition of this invention can be directly used as an adhesive or used in the preparation of an adhesive together with other raw materials.

When used as an adhesive, the composition of this invention may be firstly applied on a surface of a first substrate using conventional coating techniques (such as roll, brush coating, flow, dip, spin, spray, knife, spread, wire, gravure, doctor blade and die coating). The applied thickness may vary depending upon various factors such as, for example, the particular application, the viscosity of the composition, and the nature of the substrate. Then a second substrate is joined onto said surface, resulting in the build-up of a high strength bond that joins the two substrates. If needed, the composition may be cured at certain conditions (including temperature, time, radiation, etc.) to form an adhesive film laminated between the two substrates. Each of the first and the second substrate can be made of wood, metal, glass, cement, paper, textile, leather, plastic, foam, or brick.

The adhesive or adhesive film formed by the present composition may exhibit pressure sensitive properties and have excellent balance of adhesive strength and cohesive strength.

The adhesive film formed by the composition of the present invention may have good mechanical properties. In some embodiments, the composition of the present invention may have a peeling strength in a range of from 8 to 35 N/cm, preferably from 10 to 30 N/cm, either on glass substrate or on stainless steel substrate when forming an adhesive film.

The adhesive film formed by the composition of the present invention may have good optical performance, making it suitable to be used as an optically clear adhesive. The adhesive film may have a transmission of 90% or more, preferably 95% or more, measured by a spectrometer. The film may have a haze of 0.8% or less, preferably 0.5% or less, measured by a spectrometer.

The adhesive film formed by the composition of the present invention may exhibit low dielectric constant, making it suitable for use in electronics.

When used as an adhesive, the composition of this invention may further comprise materials commonly used in the art to impart or enhance tack of the adhesive, such as tackifier. Examples of tackifiers include rosin, rosin esters

of glycerol or pentaerythritol, hydrogenated rosins, polyterpene resins such as polymerized beta-pinene, coumarone-indene resins, "C5" and "C9" polymerized petroleum fractions, and the like. In addition, when used as adhesives, the composition of this invention may further comprise other additives to change the properties of the adhesives. Such additives include plasticizing agent, pigments, tackifier, fillers such as glass or polymeric bubbles or beads (which may be expanded or unexpanded), hydrophobic or hydrophilic silica, calcium carbonate, glass or synthetic fibers, blowing agents, toughening agents, reinforcing agents, fire retardants, antioxidants, and stabilizers. The additives are added in amounts sufficient to obtain the desired end properties. If the other additives are used, then up to about 40 wt%, preferably less than 30 wt%, and more preferably less than 5 wt% based on the dry weight of the total copolymer (A), would be suitable.

Uses in coatings

The term "coating" or "coatings" is understood to mean a substance applied to a substate in the film form, with a thickness sufficient to modify the appearance of the substate, in particular its optical properties, and/or to protect its surface, in particular against scratches, moisture, dirt or light. The term "coating composition" does not encompass adhesive compositions, but may encompass paint, protective coating, varnish and ink compositions, without this list being limiting. The substate for coating can be made of wood, metal, glass, cement, paper, textile, leather, plastic, foam, or brick.

The composition of this invention can be directly used as a coating or used in the preparation of a coating together with other raw materials.

When used as a coating, the composition of this invention may be applied on the surface of a first substrate using conventional coating techniques (such as roll, brush coating, flow, dip, spin, spray, knife, spread, wire, gravure, doctor blade and die coating) to form a coating film at certain curing conditions (including temperature, time, radiation, etc.). The thickness of the coating film may vary depending upon various factors such as, for example, the particular application, the viscosity of the composition, and the nature of the substrate, and can be even or uneven. The cured coating film can be a dry film with desired hardness.

The coating film formed by the composition of the present invention may have good optical transparency. The film may have a transmission of 90% or more, preferably 95% or more, measured by a spectrometer. The film may have a haze of 0.8% or less, preferably 0.5% or less, measured by a spectrometer.....

The composition may further comprise various additives chosen, for example, from one or more pigments; one or more pulverulent fillers; one or more pH adjusters; one or more dispersing and/or wetting agents, such as sodium polyphosphate, potassium polyphosphate or ammonium polyphosphate and naphthalenesulfonic acid salts; one or more thickening agents, such as xanthan and cellulose derivatives; one or more antifoaming agents; one or more film-forming agents; one or more antifreezes; one or more flame retardants, in particular organophosphorous compounds, magnesium hydroxide or aluminum hydroxide; one or more biocides; and their mixtures.

**Articles**

The present application also provides articles comprising at least one film formed by the composition of the present invention. The article can be an electronic device, such as a flexible or foldable display device or touchscreen.

**Examples**

The following examples illustrate the invention without limiting it.

Materials and Methods

The following compounds were used in the examples:

Table 1.

| Abbreviations or Trade Name | Full Name and Supplying Information |
|---|---|
| 2-EHA | 2-Ethylhexyl acrylate, available from LG Chem |
| 2-OA | 2-Octyl acrylate, self-prepared |
| 2-MBA | 2-Methylbutanol acrylate, self-prepared |
| 3-MBA | 3-Methylbutanol acrylate, self-prepared |

(continued)

| Abbreviations or Trade Name | Full Name and Supplying Information |
|---|---|
| IBOA | Isobornyl acrylate, available from Sartomer SR506 NS |
| SR285 | Tetrahydrofurfuryl acrylate, available from Sartomer |
| SR420 NS | 3,3,5 trimethyl cyclohexyl acrylate, available from Sartomer |
| SR395 NS | Isodecyl acrylate, available from Sartomer |
| DMAA | N,N-Dimethyl acrylamide, available from KJ Chemicals |
| CN8899 NS | Urethane acrylate oligomer, available from Sartomer |
| SYLVARES 6100 | Styrenated Terpene, available from Kraton |
| Escorez 5400 | Hydrocarbon resin, available from Exxonmobil Chemical |
| Oppanol B10 | Polyisobutene (PIB), available from BASF |
| Speedcure 84 | Photo-initiator, available from Lambson |
| Speedcure XKm | Photo-initiator, available from Lambson |

The following methods were used to measure the different properties in the examples:

Molecular Weight and Distribution

The number average molecular weight (Mn), weight average molecular weight (Mw) and molecular weight distribution (Mw/Mn) of the copolymer were determined by gel permeation chromatography (GPC) using polystyrene standards. The measurement conditions of GPC are given below.

Model: Agilent Technologies 1200 series

- Column: Edipse XDB-C18/ Edipse Plus C18
- Eluent: tetrahydrofuran (THF)
- Flow rate: 0.45 mL/min
- Temperature: 40°C
- Injection volume and concentration of sample: 5 μL, 10 mg/mL
- Detection: RI (differential refractometer)
- System to gather and process data: Waters Empower3 Tg

Tg of the copolymer is calculated according to Fox Equation. The calculation formula is:

$$\frac{1}{T_g} = \frac{W_1}{T_{g1}} + \frac{W_2}{T_{g2}} + \cdots + \frac{W_n}{T_{gn}}$$

wherein $W_1$ to $W_n$ is the mass fraction of each monomer used to obtain the copolymer; and $T_{g1}$ to $T_{gn}$ is the glass transition temperature (in Kelvin degree, "K") of the homopolymer corresponding to each monomer.

Transmission and Haze

The transmission and haze were measured using a spectrophotometer (HunterLab ColorQuest XE). Sample preparation: the composition was coated on a float glass substrate with a 50μm thickness, cured by drying or exposure to a mercury lamp with 225wm/$cm^2$, 2000mj/$cm^2$ UV dose.

Peeling Strength

Also called peel strength, peeling force, or adhesive strength.

For peeling strength on stainless steel substrate, a sample was prepared by laminating a SUS 304 plate, an adhesive of 100 μm thickness, and a 100μm PET film. Subject the sample to UV exposure if the adhesive composition is a UV curable composition. Then the samples were stored at room temperature for 24 hours. The peeling strength was measured by peeling in a direction of 180° at a rate of 300 /min at 23°C with tensile testing machine (Shimadzu AGS-X).

For peeling strength on glass substrate, a same procedure was carried out as the above except using glass plate instead of the SUS 304 plate.

Holding Power

It was determined according to ASTM D4498. It is an adhesive tape with a thickness of 50 micrometers and 25mm width and produced on the stainless steel (SUS304) board, 1000 g loading was hung, the temperature rise was set at 25 degrees C and 70 degrees C, and search for the time of fall at 25 degrees C and 70 degree C separately.

Aging Test

A humidity thermal test is conducted at 85°C 85% relative humidity (RH) using BGD 897/100C from BIUGED company.

Preparation of 2-OA

Sec octyl alcohol (260.0g), acrylic acid (158.0g), heptane (198.0g), p-methoxyphenol (1.35g) and methyl sulfonic acid (6.0g) were added to a 4-neck round bottom flask and mixed well at room temperature. A reflux condenser was installed on the 4-neck round bottom flask and dry air was blown therein, the mixture was slowly heated to reach the reflux temperature (i.e. 100-120°C). The mixture was kept refluxing for 10 hours, then sampled for water yield and acid value hourly. When the water yield reached 39 ml and the acid value of mixture was less than 23 mg KOH/g, the reaction was stopped. A transparent oil mixture was obtained with 2-OA, acrylic acid and heptane.

Preparation of 2-MBA

2-methyl-1-butanol (260.0g), acrylic acid (234.0g), heptane (197.0g), p-methoxyphenol (1.4g) and methyl sulfonic acid (7.0 g) were added to a 4-neck round bottom flask and mixed well at room temperature. A reflux condenser was installed on the 4-neck round bottom flask and dry air was blown therein, the mixture was slowly heated to reach the reflux temperature (i.e. 100-120°C). The mixture was kept refluxing for 10 hours, then sampled for water yield and acid value hourly. When the water yield reached 56 ml and the acid value of mixture was less than 24 mg KOH/g, the reaction was stopped. A transparent oil mixture was obtained with 2-MBA, acrylic acid and heptane.

Preparation of 3-MBA

3-methyl-1-butanol (260.0g), acrylic acid (234.0g), heptane (197.0g), p-methoxyphenol (1.4g) and methyl sulfonic acid (7.0g) were added to a 4-neck round bottom flask and mixed well at room temperature. A reflux condenser was installed on the 4-neck round bottom flask and dry air was blown therein, the mixture was slowly heated to reach the reflux temperature(i.e. 100-120°C). The mixture was kept refluxing for 10 hours, then sampled for water yield and acid value hourly. When the water yield reached 56 ml and the acid value of mixture was less than 24 mg KOH/g, the reaction was stopped. A transparent oil mixture was obtained with 3-MBA, acrylic acid and heptane.

Example 1-10: copolymers

The following Examples 1-11 relate to the preparation of a copolymer, among which Examples 1-8 are according to the invention, while Examples 9 to 11 are comparative examples.

Example 1 (according to the invention).

Toluene (52.0g) and ethyl acetate (8.0g) were added to a 4-neck round bottom flask and mixed well at room temperature, stirred and heated to 85°C. 2-OA (50.0g), IBOA (56.5 g), AIBN (0.5g), and toluene (20.0g) were mixed and

added at a constant speed within 90 mins under dried nitrogen. The temperature was maintained at 85°C for some time, then heated to 95°C and kept 60 mins after the addition of the mixture of 2-OA, IBOA, AIBN and toluene. Then a mixture of AIBN (0.2g) and toluene (2.0g) was added. The mixture was kept at 95°C for 2 hours, then sampled for GPC. A transparent oil was obtained after cooled down and filtration.

Examples 2-10. The process according to Example 1 was repeated, where the composition of the monomer feed was set as presented in Table 2 and Table 3.

The characteristic data of the copolymer prepared in Example 1-10, including %BRC, molecular weight and distribution, and Tg were shown Table 2 and Table 3.

The obtained copolymer in Examples 1-10 can be used as an adhesive directly. Apply one copolymer (prepared in Examples 1-10) on a substrate (SUS 304 plate or glass layer) with 100 μm thickness and cover it with a 100μm PET film. After storage at room temperature for 24 hours, the middle layer will form an adhesive film. The transmission, haze and peeling strength of the adhesive film were measured according to the testing methods described above and shown in Table 2 and Table 3.

Table 2.

| | | E1 | E2 | E3 | E4 | E5 |
|---|---|---|---|---|---|---|
| Monomers and weight ratio | | 2-OA IBOA 1:1 | 2-MBA IBOA 1:1 | 3-MBA IBOA 1:1 | 2-OA 2-MBA IBOA 1:1:1 | 2-OA 2-MBA IBOA AA 33:33:33:1 |
| Properties | %BRC | 75 | 70 | 70 | 71 | 70 |
| | Mn | 14,708 | 13,825 | 15,298 | 30,723 | 22,697 |
| | Mw | 56,647 | 58,941 | 67,941 | 90,280 | 63,644 |
| | Mw/Mn | 3.88 | 4.26 | 4.44 | 2.94 | 2.80 |
| | Tg (°C) | 4.8 | 33 | 30 | -2 | 3 |
| | Transmission (%) | 99 | 99 | 99 | 99 | 99 |
| | Haze (%) | 0.2 | 0.3 | 0.3 | 0.2 | 0.2 |
| | Peel-Glass (N/cm) | 10.2 | 14.0 | 13.7 | 4.7 | 3.8 |
| | Peel-SUS304 (N/cm) | 9.4 | 12.4 | 14.9 | 3.9 | 3.6 |

Table 3.

| | | E6 | E7 | E8 |
|---|---|---|---|---|
| Monomers and weight ratio | | 2-OA<br>3-MBA<br>IBOA<br>1:1:1 | 2-OA<br>3-MBA<br>IBOA<br>AA<br>33:33:33:1 | 2-OA<br>IBOA<br>2-EHA<br>1:2:1 |
| Properties | %BRC | 71 | 70 | 59 |
| | Mn | 38,523 | 26,340 | 22,437 |
| | Mw | 82,310 | 98,183 | 35,351 |
| | Mw/Mn | 2.14 | 3.73 | 1.5756 |
| | Tg (°C) | -3 | 2 | -1 |
| | Transmission (%) | 99 | 99 | 99 |
| | Haze (%) | 0.3 | 0.3 | 0.2 |
| | Peel-Glass (N/cm) | 3.73 | 7.65 | 8 |
| | Peel-SUS304 (N/cm) | 4.33 | 7.15 | 8.4 |

Table 4.

| | | E9-C | E10-C | E11-C |
|---|---|---|---|---|
| Monomers and weight ratio | | 2-EHA<br>IBOA<br>1:1 | 2-OA<br>3-MBA<br>2-EHA<br>28:36:36 | 2-OA<br>2-MBA<br>MAA<br>28:71:1 |
| Properties | %BRC | 39 | 42 | 65 |
| | Mn | 15,680 | 31,136 | 26,099 |
| | Mw | 61,049 | 102,310 | 68,766 |
| | Mw/Mn | 3.89 | 3.29 | 2.63 |
| | Tg (°C) | 15.2 | -44 | -19 |
| | Transmission (%) | 99 | 99 | 99 |
| | Haze (%) | 0.2 | 0.2 | 0.2 |
| | Peel-Glass (N/cm) | 9.8 | 0.04 | 0.1 |
| | Peel-SUS304 (N/cm) | 8.81 | 0.04 | 0.1 |

According to the results shown in Table 2 to Table 4, the combination usage of at least one of 2-OA, 2-MBA and 3-MBA, and at least one of IBOA or IBMOA can prepare a copolymer having high %BRC values (>70) and with both good optical properties (almost transparent) and mechanical properties (good peeling force on substrates such as glass and SUS304).

Examples 11-21: radiation-curable compositions

The following Examples 11-14 relate to radiation-curable compositions according to the invention. For each example 11-14, the parts of raw materials by weight according to Table 4 were mixed, coated on a PET film and laminated a PET release film. After exposing to UV light, the PET release film was then removed, and a cured adhesive film was obtained. For peeling strength test, the cured adhesive film was laminated to glass or SUS304 by hand with a hand roller, with heavy pressure to the exposed side of cured adhesive film. The optical properties and peeling strength of the cured adhesive film were shown in Table 4. In the raw material part of Table 4, E1, E2, E4, and E7 refer to the copolymer prepared in Example 1, Example 2, Example 4 and Example 7 respectively. The UV exposure was conducted using a mercury lamp with 225 mW/cm$^2$, 2000 mJ/cm$^2$ UV dose.

Table 4.

| | | E11 | E12 | E13 | E14 |
|---|---|---|---|---|---|
| Raw material | E1 | 67 | | | |
| | E2 | | 67 | | |
| | E4 | | | 67 | |
| | E7 | | | | 67 |
| | SR285 | 25 | 25 | | |
| | SR420 | | | 25 | 25 |
| | DMAA | 8 | 8 | 8 | 8 |
| | Speedcure 84 | 1 | 1 | 1 | 1 |
| | Speedcure XKm | 1 | 1 | 1 | 1 |
| Properties | Transmission (%) | 99 | 99 | 99 | 99 |
| | Haze (%) | 0.3 | 0.4 | 0.5 | 0.5 |
| | PET/Glass (N/cm) | 20.0 | 21.6 | 26 | 38.9 |
| | PET/SUS304 (N/cm) | 17.4 | 19.2 | 24.5 | 41.7 |

The following Examples 15-21 relate to radiation-curable compositions with urethane acrylate oligomer CN8899 NS, among which Examples 15-18 are according to the invention, and Examples 19-21 are comparative examples with conventional tackifiers.

For each Example of 15-21, the raw materials according to Table 5 were mixed by weight parts, coated on a PET film and laminated with a PET release film. After exposing to UV light, the PET release film was removed, and a cured adhesive film was obtained. For peeling strength test, the cured adhesive film was laminated to a glass or stainless steel (SS) substrate by hand with a hand roller, with heavy pressure to the exposed side of cured adhesive film. The optical properties and peeling strength of the cured adhesive film were shown in Table 5. In the raw material part of Table 5, E1, E2, E4, and E7 mean the copolymer prepared in Example 1, Example 2, Example 4 and Example 7 respectively. The UV exposure was conducted by using a mercury lamp with 225 mW/cm$^2$, 2000 mJ/cm$^2$ UV dose.

Table 5.

| | | E15 | E16 | E17 | E18 | CE19 | CE20 | CE21 |
|---|---|---|---|---|---|---|---|---|
| Raw materials | Tackifier | E1 | E2 | E4 | E7 | Sylvares 6100 | Escorez 5400 | Oppanol B10 |
| | | 25 | 25 | 25 | 25 | 25 | 25 | 25 |
| | CN8899 NS | 50 | 50 | 50 | 50 | 50 | 50 | 50 |
| | SR395 NS | 25 | 25 | 25 | 25 | 25 | 25 | 25 |
| | Speedcure 84 | 2 | 2 | 2 | 2 | 2 | 2 | 2 |
| | Speedcure XKm | 1 | 1 | 1 | 1 | 1 | 1 | 1 |
| Properties | Compatibility | Good | Good | Good | Good | Bad | Bad | Bad |
| | Transmission (%) | 98.2 | 98.0 | 96.2 | 95.8 | / | / | / |
| | Haze (%) | 0.9 | 0.9 | 1.8 | 2.1 | / | / | / |
| | PET/Glass (N/cm) | 36.6 | 22.3 | 46.3 | 49.6 | / | / | / |
| | PET/SUS304 (N/cm) | 42.3 | 20.2 | 48.8 | 48.6 | / | / | / |
| | Holding power at 70°C (hours) | 48 | 120 | 24 | 30 | | | |

As shown in Table 5, when the copolymer of the invention was used as tackifier in a radiation-curable adhesive composition, it had good compatibility with the urethane acrylate oligomer (CN8899 NS) in the system. Moreover, the cured adhesive film presented good optical properties and adhesive strength. However, the conventional tackifiers showed poor compatibility with the urethane acrylate oligomer (CN8899 NS). Due to the poor compatibility, the system of comparative examples 19-21 cannot be used as an optically clear adhesive.

**Claims**

1. A copolymer obtained by polymerizing a monomer mixture comprising, based on the total weight of the monomer mixture:

   (a) from 45 to 95 wt%, in particular from 45 to 90 wt%, from 48 to 80 wt% or from 50 to 70 wt%, of at least one monomer selected from the group consisting of 2-octyl (meth)acrylate, 2-methylbutyl acrylate, 3-methylbutyl acrylate, and mixtures;
   (b) from 5 to 55 wt%, in particular from 10 to 55 wt%, from 20 to 52 wt% or from 30 to 50 wt%, of isobornyl (meth)acrylate;
   (c) from 0 to 5 wt%, in particular from 0 to 2 wt%, from 0 to 1 wt% or even 0 wt%, of at least one carboxyl-functional ethylenically unsaturated monomer; and
   (d) from 0 to 30 wt%, in particular from 0 to 20 wt%, from 0 to 10 wt% or from 0 to 5 wt%, of at least one ethylenically unsaturated monomer other than (a), (b) and (c).

2. The copolymer according to claim 1, wherein the copolymer has a Bio Renewable Carbon content (%BRC) greater than 10, preferably greater than 30, more preferably greater than 50, and even more preferably greater than 70.

3. The copolymer according to claim 1 or 2, wherein the copolymer has a weight average molecular weight from 20,000 to 120,000 g/mol, preferably from 30,000 to 100,000 g/mol, more preferably from 40,000 to 90,000 g/mol.

4. The copolymer according to any one of claims 1 to 3, wherein the copolymer has a glass transition temperature ranging from -40 °C to 50 °C, preferably from -30 °C to 40 °C, and more preferably from -20 °C to 30 °C, calculated according to the Fox Equation.

5. The copolymer according to any one of claims 1 to 4, wherein component (a) comprises or consists of, based on the total weight of component (a):

(a1) from 1 to 99 wt% of 2-octyl (meth)acrylate; and
(a2) from 1 to 99 wt% of 2-methylbutyl acrylate and/or 3-methylbutyl acrylate.

**6.** The copolymer according to any one of claims 1 to 5, wherein the monomer mixture is substantially free of component (c).

**7.** A composition comprising the copolymer according to any one of claims 1 to 6.

**8.** The composition according to claim 7, wherein the composition comprises:

(A) the copolymer according to any one of claims 1 to 6; and
(B) at least one crosslinking agent selected from a multifunctional amine, hydrazide, aziridine, isocyanate, oxazole or epoxy compound.

**9.** The composition according to claim 7, wherein the composition comprises:

(A) the copolymer according to any one of claims 1 to 6;
(C) at least one ethylenically unsaturated compound; and
optionally (D) at least one free-radical initiator.

**10.** The composition according to claim 9, wherein component (C) comprises or consists of:
(C1) at least one (meth)acryloyl-functionalized monomer, in particular at least one mono(meth)acryloyl-functionalized monomer, more particularly a mono(meth)acrylate-functionalized monomer having a branched alkyl group or a cyclic group.

**11.** The composition according to claim 9 or 10, wherein component (C) comprises or consists of:
(C2) at least one at least one (meth)acrylate-functionalized oligomer, in particular at least one (meth)acrylate-functionalized urethane oligomer, more particularly at least one (meth)acrylate-functionalized urethane oligomer that comprises, in its backbone, a hydrophobic moiety derived from a polyolefin, a polydiene or a hydrogenated polydiene.

**12.** The composition according to any one of claims 9 to 11, wherein the composition comprises:

10 to 90 wt%, in particular 60 to 80 wt%, of (A) the copolymer according to any one of claims 1 to 7;
10 to 90 wt%, in particular 20 to 40 wt%, of (C1) at least one mono(meth)acryloyl-functionalized monomer;
0 to 5 wt%, in particular 1 to 3 wt% of (D) at least one free-radical initiator

**13.** The composition according to any one of claims 9 to 11, wherein the composition comprises:

10 to 90 wt%, in particular 10 to 35 wt% of (A) the copolymer according to any one of claims 1 to 7;
10 to 90 wt%, in particular 15 to 35 wt% of (C1) at least one mono(meth)acryloyl-functionalized monomer;
10 to 90 wt%, in particular 30 to 74 wt% of (C2) at least one (meth)acrylate-functionalized urethane oligomer; and
0 to 5 wt%, in particular 1 to 3 wt% of (D) at least one free-radical initiator.

**14.** The composition according to claim 7, wherein the composition comprises the copolymer according to any one of claims 1 to 6 and a solvent, wherein the solvent is an organic solvent or water.

**15.** The use of the composition according to any one of claims 7 to 14, in the preparation of or as an adhesive or a coating.

**16.** An article comprising at least one film formed by curing the composition according to any one of clams 7 to 14, wherein the at least one film has a transmission of 95% or more and a haze of 0.5% or less.

**17.** The article according to claim 16, wherein the article is an electronic device, such as a flexible or foldable display device or touchscreen.

Europäisches Patentamt
European Patent Office
Office européen des brevets

# EUROPEAN SEARCH REPORT

Application Number
EP 22 30 6326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/109262 A1 (3M INNOVATIVE PROPERTIES CO [US]) 7 July 2016 (2016-07-07) | 1,2,4,6, 7,14,15 | INV. C08F2/48 C08F220/18 C08F265/06 C09J4/06 |
| Y | * page 6, line 19 - line 23; example 11; table 3 * | 1,2,4, 6-8,16, 17 | |
| | ----- | | |
| X | WO 2021/164893 A1 (THE UNIV OF THE BASQUE COUNTRY [ES] ET AL.) 26 August 2021 (2021-08-26) | 1,4,7, 14,15 | |
| Y | * comparative example A inventive example F; figures 5A,5B; tables 1-2 * | 1,4,6-8, 16,17 | |
| | ----- | | |
| X | ADRIáN BADíA ET AL: "High Biobased Content Latexes for Development of Sustainable Pressure Sensitive Adhesives", INDUSTRIAL & ENGINEERING CHEMISTRY RESEARCH, vol. 57, no. 43, 4 October 2018 (2018-10-04), pages 14509-14516, XP055716315, ISSN: 0888-5885, DOI: 10.1021/acs.iecr.8b03354 | 1,2,4,7, 14,15 | TECHNICAL FIELDS SEARCHED (IPC) C08F C08J C09J |
| Y | * PSA B; table 2 * | 1,2,4,7, 8,16,17 | |
| | ----- | | |
| | -/-- | | |

The present search report has been drawn up for all claims

1

| Place of search | Date of completion of the search | Examiner |
|---|---|---|
| The Hague | 20 January 2023 | Jegou, Gwénaëlle |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 30 6326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BADÍA ADRIÁN ET AL: "Biobased Alkali Soluble Resins promoting supramolecular interactions in sustainable waterborne Pressure-Sensitive Adhesives: High performance and removability", EUROPEAN POLYMER JOURNAL, PERGAMON PRESS LTD OXFORD, GB, vol. 144, 28 December 2020 (2020-12-28), XP086454538, ISSN: 0014-3057, DOI: 10.1016/J.EURPOLYMJ.2020.110244 [retrieved on 2020-12-28] | 1-4,6,7, 14,15 | |
| Y | * compound RI2; tables 6-7 * | 1,4,6-8, 16,17 | |
| Y | WO 2013/055015 A1 (CHEIL IND INC [KR]; CHO IK HWAN [KR] ET AL.) 18 April 2013 (2013-04-18) * paragraph [0090]; example 7 * * page 8, paragraph 100 - page 9, paragraph 107 * * paragraph [0005] * | 1,5, 8-13,16, 17 | |
| | | | TECHNICAL FIELDS SEARCHED (IPC) |
| Y | US 6 887 917 B2 (3M INNOVATIVE PROPERTIES CO [US]) 3 May 2005 (2005-05-03) * examples 10-15; table 4 * | 9-13 | |
| Y | WO 2022/018013 A1 (BASF SE [DE]) 27 January 2022 (2022-01-27) * page 8, line 38 - page 9, line 3 * | 5 | |

The present search report has been drawn up for all claims

1

| Place of search | Date of completion of the search | Examiner |
|---|---|---|
| The Hague | 20 January 2023 | Jegou, Gwénaëlle |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 30 6326

This annex lists the patent family members relating to the patent documents cited in the above-mentioned European search report. The members are as contained in the European Patent Office EDP file on
The European Patent Office is in no way liable for these particulars which are merely given for the purpose of information.

20-01-2023

| Patent document cited in search report | Publication date | Patent family member(s) | Publication date |
|---|---|---|---|
| WO 2016109262 A1 | 07-07-2016 | EP 3240850 A1 | 08-11-2017 |
| | | JP 6768668 B2 | 14-10-2020 |
| | | JP 2018501378 A | 18-01-2018 |
| | | TW 201631095 A | 01-09-2016 |
| | | US 2018022967 A1 | 25-01-2018 |
| | | WO 2016109262 A1 | 07-07-2016 |
| WO 2021164893 A1 | 26-08-2021 | EP 4045546 A1 | 24-08-2022 |
| | | WO 2021164893 A1 | 26-08-2021 |
| WO 2013055015 A1 | 18-04-2013 | NONE | |
| US 6887917 B2 | 03-05-2005 | AT 333479 T | 15-08-2006 |
| | | AU 2003286902 A1 | 29-07-2004 |
| | | CN 1732193 A | 08-02-2006 |
| | | DE 60306961 T2 | 01-03-2007 |
| | | EP 1578823 A1 | 28-09-2005 |
| | | JP 4975965 B2 | 11-07-2012 |
| | | JP 2006512442 A | 13-04-2006 |
| | | KR 20050088241 A | 02-09-2005 |
| | | US 2004127594 A1 | 01-07-2004 |
| | | US 2005191507 A1 | 01-09-2005 |
| | | WO 2004060946 A1 | 22-07-2004 |
| WO 2022018013 A1 | 27-01-2022 | TW 202214720 A | 16-04-2022 |
| | | WO 2022018013 A1 | 27-01-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013064775 A